# EUROPÄISCHE PATENTSCHRIFT

(11) **EP 2 783 620 B1**
(45) Veröffentlichungstag und Bekanntmachung des Hinweises auf die Patenterteilung: **17.02.2016**
(21) Anmeldenummer: 14156462.5
(22) Anmeldetag: 25.02.2014
(51) Int. Cl.: A47L 15/42, D06F 39/08, B01D 61/08, B01D 61/12, C02F 1/44, B01D 61/04, B01D 61/02, B01D 61/10, C02F 1/00, C02F 1/28, C02F 5/00

(54) **Funktionsblock zum fluiden Verbinden**
Function block for fluid connection
Bloc fonctionnel pour liaison fluide

(30) Priorität: 25.03.2013 DE 102013005201
(43) Veröffentlichungstag der Anmeldung: 01.10.2014
(73) Patentinhaber: WINTERHALTER GASTRONOM GMBH, 88074 Meckenbeuren (DE)
(72) Erfinder: Schwarz, Andreas, 88094 Oberteuringen (DE); Wielath, Ulrich, 88690 Uhldingen-Mühlhofen (DE)
(74) Vertreter: Appelt, Christian W.

(56) Entgegenhaltungen:
- EP-A2- 2 361 542
- DE-A1- 4 015 336
- DE-A1- 19 748 997
- DE-A1-102005 039 385
- DE-A1-102011 076 989
- DE-U1- 9 403 650
- DE-U1- 20 016 451

## Beschreibung

Die vorliegende Erfindung bezieht sich auf einen Funktionsblock zum fluiden Verbinden eines Verbrauchers, einer Rohwasserleitung, eines Abflusses und einer Wasseraufbereitungsanlage und insbesondere auf einen Funktionsblock zum fluiden Verbinden einer Spülmaschine mit einer Umkehrosmtise-Anlage.

### BESCHREIBUNG

Ein kritischer Punkt bei konventionellen Spülmaschinen, insbesondere wenn sie in einem gewerblichen Umfeld genutzt werden, ist häufig deren Verbindung zu einer Wasseraufbereitungsanlage und deren Steuerung. Für Geschirrspülanlagen in einem gewerblichen Umfeld werden hohe Anforderungen an die Zuverlässigkeit gestellt. Sie sollen nicht nur ein möglichst optimales Ergebnis beim Reinigen von Geschirr in großem Umfang erreichen, sondern auch längere Zeit oder permanent zuverlässig arbeiten. Daher sollen nicht nur die Spülmaschinen selbst, sondern auch die Zusatzkomponenten (wie beispielsweise die Wasseraufbereitung bzw. Wasserenthärtung) und die Verbindungskomponenten hohen Anforderungen genügen.

Beispielsweise müssen häufig im Umfeld der Wasseraufbereitung sehr viele fluide Leitungen miteinander verbunden werden und die konkreten Verbindungen sind von Anlage zu Anlage unterschiedlich. Daher sind bei konventionellen Spülsystemen die fluiden Verbindungen, d.h. die Leitungen selbst oder die entsprechenden Verbindungsstücke (z.B. Fittinge), häufig anfällig für Lecke oder andere Störungen. Außerdem ist die Montage der Wasseraufbereitungsanlage häufig an eine konkrete Spülmaschine anzupassen. Dies führt dazu, dass der Service aufwendig ist, da die konkrete fluide Verschaltung von Anlage zu Anlage variiert.

Ein Funktionsblock mit den Merkmalen des Oberbegriffs des Anspruchs 1 ist in der EP 2 361 542 A2 offenbart.

Es ist daher die Aufgabe der vorliegenden Erfindung, einen Funktionsblock zum fluiden Verbinden und ein System mit dem Funktionsblock, einem Verbraucher und eine Wasseraufbereitungsanlage bereitzustellen, um ein hohes Maß an Zuverlässigkeit und Bedien- als auch Service-Freundlichkeit zu erreichen.

Diese Aufgabe wird durch einen Funktionsblock gemäß Anspruch 1 und einem System gemäß Anspruch 14 gelöst.

Gemäß der vorliegenden Erfindung weist der Funktionsblock zum fluiden Verbinden eines Verbrauchers, einer Rohwasserleitung, eines Abflusses und einer Wasseraufbereitungsanlage folgende Merkmale auf: einen ersten, zweiten und einen dritten Anschluss, einen Rohwasseranschluss, einen Abwasseranschluss, eine Druckregelungseinheit, eine Überwachungseinrichtung und einen Rahmen.

Der erste Anschluss und der Rohwasseranschluss sind fluid verbunden. An dem dritten Anschluss ist die Wasseraufbereitungsanlage anschließbar, und an dem Rohwasseranschluss ist eine Rohwasserleitung anschließbar. Die Druckregelungseinheit ist fluid mit dem zweiten Anschluss und mit dem Abwasseranschluss verbunden, wobei die Druckregelungseinheit ausgebildet ist, um während des Betriebes des Funktionsblockes einen vorbestimmten Druck in der fluiden Verbindung zum zweiten Anschluss aufrecht zu halten. Die Überwachungseinrichtung ist fluid mit dem dritten Anschluss und fluid mit dem Verbraucheranschluss verbunden, wobei die Überwachungseinrichtung ausgebildet ist, um zumindest eine Beschaffenheit eines fluiden Flusses zwischen dem dritten Anschluss und dem Verbraucheranschluss zu ermitteln. An dem Rahmen ist/sind ein oder mehrere Elemente aus den Folgenden befestigt: der erste Anschluss, der zweite Anschluss, der dritte Anschluss, der Rohwasseranschluss, der Abwasseranschluss, der Verbraucheranschluss, die Druckregelungseinheit und die Überwachungseinrichtung.

Mit dem Rahmen wird somit sichergestellt, dass die Elemente, die an dem Rahmen befestigt sind, eine festgelegte räumliche Position zueinander aufweisen, so dass die fluide Verbindung zwischen den einzelnen Elementen fest vorgegeben werden kann, um so möglichst auf Fittinge zu verzichten. Außerdem können die verschiedenen oben genannten Elemente durch robuste Leitungen verbunden werden. Beispielsweise können außer flexiblen auch starre Leitungen genutzt werden, um die Elemente zu verbinden. Durch feste Leitungen kann somit ein hohes Maß an Zuverlässigkeit erreicht werden, da beispielsweise Porosität infolge von Alterung ausgeschlossen werden kann.

Der Rahmen kann ferner ein Gehäuse umfassen und kann optional mit dem Verbraucher und der Wasseraufbereitungsanlage trennbar verbunden sein, so dass der Funktionsblock ein auswechselbares Modul darstellt. Das hat den Effekt, dass einerseits die fluide Verbindung zwischen den einzelnen Elementen des Funktionsblockes fest vorgegeben ist und andererseits ein leichtes Auswechseln des Funktionsblockes den Service erleichtert. Beispielsweise können Reparaturen/Überprüfungen leicht und kostengünstig durch ein Anschließen des Funktionsblockes an einen Prüfstand durchgeführt werden. Ohne viel Aufwand lässt sich somit feststellen, welches der Elemente ein Fehlverhalten zeigt. Außerdem kann mit der modularen Bauweise erreicht werden, dass der Funktionsblock für verschiedene Arten von Verbraucher und/oder für verschiedene Wasseraufbereitungsanlage nutzbar ist.

Der Funktionsblock ist nicht nur für eine gewerbliche Spülmaschine als Verbraucher nutzbar, sondern kann ebenso für eine Haushaltsspülmaschine, eine Waschmaschine, eine Kaffeemaschine, eine Eiswürfelmaschine oder einem Kombidämpfer genutzt werden. Außerdem kann als Wasseraufbereitungsanlage beispielsweise eine Teilentsalzungsanlage, eine Umkehrosmose-Anlage, eine Vollentsalzungsanlage, eine Wasserenthärtungsanlage und eine Mikro-, Nano- oder Ultrafiltrationsanlage an dem Funktionsblock angeschlossen werden. Daher weisen Ausführungsbeispiele ein hohes Maß an Flexibilität hinsichtlich der Anschlussmöglichkeiten an dem modularen Funktionsblock auf.

Der Rahmen braucht nur mit den einzelnen Elementen fest verbunden sein, nicht aber mit dem Verbraucher und/oder mit der Wasseraufbereitungsanlage, die bei weiteren Ausführungsbeispielen nur über eine oder mehrere fluide Leitungen mit dem Funktionsblock verbunden sind (ansonsten aber relativ zueinander bewegbar sind).

Die zumindest eine Beschaffenheit des fluiden Flusses zwischen dem dritten Anschluss und dem Verbraucheranschluss, welche von der Überwachungseinrichtung ermittelt wird, kann beispielsweise die Temperatur und/oder die elektrische Leitfähigkeit der Flüssigkeit umfassen. Optional kann die Durchflussrate des fluiden Flusses in der Permeatleitung mittels einer ersten Durchflussmesseinrichtung und/oder zusätzlich der Druck gemessen werden.

Bei weiteren Ausführungsbeispielen weist der Funktionsblock eine Retentat-Rückführungsleitung auf, die die Druckregelungseinheit mit dem ersten Anschluss verbindet. Optional weist der Funktionsblock eine erste Ventileinrichtung auf, die ausgebildet ist, um eine erste fluide Verbindung von der Druckregelungseinheit zu dem Abwasseranschluss und/oder die Retentat-Rückführungsleitung steuerbar zu öffnen oder steuerbar zu schließen. Mit dieser Retentat-Rückführungsleitung wird es beispielsweise in Abhängigkeit der Beschaffenheit des fluiden Flusses (die durch die Überwachungseinrichtung festgestellt wird) möglich, dass der fluide Fluss zumindest teilweise zurückgeführt werden kann und somit erneut durch die Wasseraufbereitungsanlage fließt, um so beispielsweise eine höhere Qualität des aufbereiteten Wassers zu erreichen.

Die erste Ventileinrichtung kann dabei derart gesteuert werden, dass der fluide Fluss entweder hin zu dem Verbraucher gerichtet ist oder über die Retentat-Rückführungsleitung zurück geführt wird. Bei weiteren Ausführungsbeispielen braucht die erste Ventileinrichtung nicht alternativ den einen oder den anderen Fluss zu öffnen, sondern kann ebenfalls derart gesteuert sein, dass ein Teil des fluiden Flusses zu dem Schmutzwasseranschluss gerichtet wird, während ein verbleibender Teil des fluiden Flusses über die Retentat-Rückführungsleitung zurückgeführt wird.

Bei weiteren Ausführungsbeispielen weist der Funktionsblock eine Permeat-Rückführungsleitung auf, die die Überwachungseinrichtung und den ersten Anschluss fluid miteinander verbindet. Ferner kann optional eine zweite Ventileinrichtung ausgebildet sein, um eine zweite fluide Verbindung von der Überwachungseinrichtung zu dem Verbraucheranschluss und/oder die Permeat-Rückführungsleitung steuerbar zu öffnen oder steuerbar zu schließen.

Die Permeat-Rückführungsleitung bietet somit die Möglichkeit, um den zweiten fluiden Fluss, der von dem dritten Anschluss zu der Überwachungseinrichtung fließt, erneut an den ersten Anschluss zurückzuführen und dadurch erneut aufzubereiten. Damit kann dem Verbraucher Wasser mit erhöhter Qualität zugeführt werden (z.B. nur Wasser, deren Wasserhärte oder Verschmutzung unterhalb eines Schwellenwertes liegt). Bei weiteren Ausführungsbeispielen braucht die zweite Ventileinrichtung nicht alternativ den einen oder den anderen Fluss zu öffnen, sondern kann ebenfalls derart gesteuert sein, dass ein Teil des fluiden Flusses zu dem Verbraucher gerichtet wird, während ein verbleibender Teil des fluiden Flusses über die Permeat-Rückführungsleitung zurückgeführt wird.

Bei weiteren Ausführungsbeispielen weist die Retentat-Rückführungsleitung ein Retentat-Rückschlagventil und/oder die Permeat-Rückführungsleitung ein Permeat-Rückschlagventil auf. Das Retentat-Rückschlagventil und das Permeat-Rückschlagventil sind beispielsweise ausgebildet, um einen fluiden Fluss entlang der Retentat-Rückführungsleitung bzw. der Permeat-Rückführungsleitung nur in einer Richtung zu erlauben, so dass sichergestellt werden kann, dass beispielsweise von dem Rohwasseranschluss kein direkter fluider Fluss zu dem Verbraucher möglich ist, sondern dass das Rohwasser nur über die Wasseraufbereitungsanlage zu dem Verbraucher bzw. zu dem Abwasseranschluss gelangen kann.

Bei weiteren Ausführungsbeispielen weist der Funktionsblock optional eine Bypass-Leitung auf, die den Rohwasseranschluss und den Verbraucheranschluss miteinander verbindet. Optional ist eine dritte Ventileinrichtung ausgebildet, um eine dritte fluide Verbindung von dem Rohwasseranschluss zu dem ersten Anschluss und/oder die Bypass-Leitung steuerbar zu öffnen oder steuerbar zu schließen. Wenn beispielsweise das Rohwasser eine sehr gute bzw. ausreichende Wasserqualität aufweist, ermöglicht die Bypass-Leitung, dass das Rohwasser direkt von der Rohwasserleitung zu dem Verbraucher geleitet werden kann, ohne dass es zuvor die Wasseraufbereitungsanlage passieren muss. Dazu kann die dritte Ventileinrichtung genutzt werden, um einerseits die Bypass-Leitung zu öffnen/zu schließen und andererseits die Verbindung zu dem ersten Anschluss zu schließen/zu öffnen, so dass Wasser von dem Rohwasseranschluss direkt zu dem Verbraucher gelangen kann. Wie auch bei der ersten und zweiten Ventileinrichtung kann die dritte Ventileinrichtung ausgebildet sein, um alternativ den einen oder anderen Fluss freizugeben oder einen teilweisen Fluss entlang der Bypass-Leitung und einen teilweisen Fluss zu dem ersten Anschluss hin zu erlauben.

Bei weiteren Ausführungsbeispielen weist die Überwachungseinrichtung in dem Funktionsblock einen Temperatursensor und/oder eine Leitfähigkeitsmesseinrichtung auf. Mit dem Temperatursensor wird erreicht, dass die Temperatur des fluiden Flusses, der von dem dritten Anschluss kommt, gemessen wird. Mit der Leitfähigkeitsmessung kann beispielsweise basierend auf der elektrischen Leitfähigkeit des Flusses von dem dritten Anschluss ermittelt werden, wie viele Rest-Ionen in dem fluiden Fluss vorhanden sind, um anhand dieser Daten zu bestimmen, ob eine erneute Wasseraufbereitung sinnvoll ist oder ob der fluide Fluss direkt an den Verbraucher weitergeleitet werden kann. Daher kann basierend auf diesen Daten die erste und/oder zweite und/oder dritte Ventileinrichtung entsprechend gesteuert werden.

Bei weiteren Ausführungsbeispielen weist der Funktionsblock ferner einen Drucksensor, einen Vorfilteranschluss und einen weiteren Anschluss auf, wobei der Drucksensor zwischen dem Vorfilteranschluss und dem weiteren Anschluss angeordnet ist und der Vorfilter zwischen dem ersten Anschluss und dem Vorfilteranschluss anschließbar ist. Damit wird erreicht, dass die Wasseraufbereitungsanlage durch einen Vorfilter ergänzt werden kann. Der fluide Fluss gelangt somit zunächst über den ersten Anschluss zu dem optionalen Vorfilter, von wo er nach einer Vorfiltrierung anschließend über den Vorfilteranschluss an den Drucksensor weitergeleitet wird, um nach Ermitteln des Druckes durch den Drucksensor den fluiden Fluss schließlich über dem weiteren Anschluss der Wasseraufbereitungsanlage weiter zu leiten.

Bei weiteren Ausführungsbeispielen weist der Funktionsblock eine oder mehrere der folgenden Komponenten auf: einen weiteren Drucksensor zum Messen eines weiteren Druckes am Rohwasseranschluss, eine zweite Durchflussmesseinrichtung zum Messen einer Durchflussrate von Rohwasser von dem Rohwasseranschluss, einen zusätzlichen Drucksensor zum Messen eines zusätzlichen Druckes am Verbraucheranschluss, und optional eine weitere Durchflussmesseinrichtung zum Messen einer Durchflussrate an dem Verbraucheranschluss.

Somit können der weitere Drucksensor zwischen dem Rohwasseranschluss und dem ersten Anschluss und/oder die zweite Durchflussmesseinrichtung stromabwärts von dem Rohwasseranschluss angeordnet sein. Optional kann stromaufwärts von dem Verbraucheranschluss der zusätzlicher Drucksensor und/oder die erste Durchflussmesseinrichtung ausgebildet sein.

Mit dem Drucksensor, dem weiteren Drucksensor und dem zusätzlichen Drucksensor ist es beispielsweise möglich, eine Druckdifferenz, die über der Wasseraufbereitungsanlage anliegt, zu messen und/oder eine Druckdifferenz, die über dem Vorfilter in Bezug auf dem Rohwasseranschluss anliegt, zu messen. Außerdem ist es möglich, basierend auf dem Druck auf der Rohwasserleitung die Steuerung des Funktionsblockes durchzuführen und gleichzeitig den Druck, mit welchem das Permeat (aufbereitetes Wasser) an den Verbraucher abgegeben wird, entsprechend den Anforderungen des jeweiligen Verbrauchers anzupassen. Die erste Durchflussmesseinrichtung und/oder die zweite Durchflussmesseinrichtung ermittelt/ermitteln eine/mehrere Durchflussrate/Durchflussraten, mit der einerseits das Rohwasser über den Rohwasseranschluss dem Funktionsblock zugeführt wird und andererseits das Permeat über den Verbraucheranschluss von dem Funktionsblock an den Verbraucher weitergeleitet wird. Aus der Differenz kann die Menge des Retentats ermittelt werden.

Bei weiteren Ausführungsbeispielen sind die Druckregelungseinheit und/oder die Überwachungseinrichtung und/oder die erste, die zweite und/oder die dritte Ventileinrichtung und/oder der Drucksensor und/oder der weitere und/oder der zusätzliche Drucksensor entlang einer Hauptfläche des Rahmens versetzt zueinander angeordnet, so dass der Funktionsblock eine flächenförmige Ausgestaltung aufweist. Damit wird erreicht, dass die fluiden Verbindungen zwischen den einzelnen Komponenten ebenfalls im Wesentlichen in einer Fläche ausgebildet sind, so dass im Falle von Störungen, diese fluiden Verbindungen leicht zugänglich sind.

Wenn der Rahmen das optionale Gehäuse aufweist, brauchen von außen lediglich die Anschlüsse für die Wasseraufbereitungsanlage, den Verbraucher und das Rohwasser sichtbar und/oder zugänglich sein, um so durch die integrierte Bauweise weitere Störmöglichkeiten auszuschließen. Diese modulare Bauweise weist weiter den Vorteil auf, dass der Funktionsblock leicht auswechselbar ist und als eine Standardkomponente hergestellt werden kann, so dass er kostengünstig hergestellt und leicht ersetzt werden kann, falls es zu Funktionsstörungen kommt. Außerdem kann der Funktionsblock leicht in einer Testvorrichtung verschiedenen Tests unterzogen werden.

Bei weiteren Ausführungsbeispielen sind die erste Ventileinrichtung und/oder die zweite Ventileinrichtung und/oder die dritte Ventileinrichtung als ein Dreiwegeventil oder als zwei Zweiwegeventile ausgebildet. Dreiwegeventile weisen den Vorteil auf, dass lediglich eine Komponente in den Funktionsblock zu integrieren ist, so dass weitere fluide Anschlüsse vermieden werden können. Demgegenüber weisen zwei Zweiwegeventile den Vorteil auf, dass eine separate Steuerung möglich wird, und auch Zwischenzuständen, in denen beide Ventile jeweils teilweise geöffnet sind, möglich ist bzw. leicht zu realisieren ist. Drei- oder Mehrwegventile, die ein teilweises Öffnen einzelner Wege erlauben, können ebenfalls in den Ventileinrichtungen integriert sein.

Bei weiteren Ausführungsbeispielen ist optional eine Steuereinheit in dem Funktionsblock oder separat dazu (zum Beispiel extern von dem Rahmen) ausgebildet, um den Funktionsblock in verschiedenen Betriebsmodi durch ein Steuern der ersten Ventileinrichtung und/oder der zweiten Ventileinrichtung und/oder der dritten Ventileinrichtung zu betreiben. Ferner kann die Steuereinheit Sensordaten von dem Drucksensor und/oder der Überwachungseinrichtung als auch dem weiteren Drucksensor und/oder dem zusätzlichen Drucksensor empfangen, um basierend auf den Messdaten, die Ventile entsprechend zu steuern.

Damit kann erreicht werden, dass einerseits die Wasseraufbereitungsanlage optimal mit Rohwasser versorgt wird und der Druck am Eingang und Ausgang der Wasseraufbereitungsanlage entsprechend eingestellt wird, so dass ein optimales Ergebnis erzielbar wird. Außerdem kann der Druckabfall über der Wasseraufbereitungsanlage als auch über der optionalen Vorfilterstufe ermittelt werden, um daraus Fehlverhalten (z.B. Lecke) zu detektieren bzw. eine optimale Arbeitsweise zu ermöglichen.

Bei weiteren Ausführungsbeispielen ist die Druckregelungseinheit ein Schaltventil und/oder ein motorisch angetriebenes digitales oder analoges Ventil und/oder eine Drossel und/oder ein allgemeiner Mengenregler.

Weitere Ausführungsbeispiele beziehen sich auf ein System mit einem zuvor beschriebenen Funktionsblock und eine Wasseraufbereitungsanlage und einem Verbraucher. Optional kann die Wasseraufbereitungsanlage eines aus dem Folgenden sein: eine Teilentsalzungsanlage, eine Umkehrosmose-Anlage, eine Vollentsalzungsanlage, eine Wasserenthärtungsanlage und eine Mikro-, Nano- oder Ultrafiltrationsanlage. Bei weiteren Ausführungsbeispielen ist der Verbraucher eines aus dem Folgenden: eine gewerbliche Spülmaschine, eine Haushaltsspülmaschine, eine Waschmaschine, eine Kaffeemaschine, eine Eiswürfelmaschine oder ein Kombidämpfer.

Der Funktionsblock gemäß Ausführungsbeispielen der vorliegenden Erfindung weist die folgenden Vorteile auf. Zunächst ist es möglich, die Wahrscheinlichkeit von Lecken zu minimieren, da zahlreiche Fittinge nicht erforderlich sind. Stattdessen können die einzelnen Komponenten entlang des Rahmens derart fest angeordnet werden, dass feste fluide Verbindungen zwischen den einzelnen Komponenten ausgebildet sind. Außerdem weisen Ausführungsbeispiele den Vorteil auf, dass eine feste Verkabelung (z.B. nur ein Kabelbaum) von der optionalen Steuereinheit zum Funktionsblock ausgebildet ist. Optional, ist lediglich der Pumpenmotor für eine beispielhafte Umkehrosmose-Anlage separat an das Stromversorgungsnetz angeschlossen.

Weitere Vorteile beziehen sich auf die Qualitätssicherung, da nur ein Funktionsblock als eine integrierte Komponente genutzt wird. Die Montage und die Prüfung des Funktionsblocks können beispielsweise vollautomatisch auf einem Prüfstand erfolgen. Ferner ist ein geringer Verschlauchungsaufwand möglich (beispielsweise mit nur acht Schnittstellen) und somit wird eine geringe Montagezeit bei geringen Montagekosten ermöglicht.

Außerdem ist der Funktionsblock überschaubar, so dass zum Beispiel die Bezeichnung und die Beschriftung der Komponenten an dem Funktionsblock möglich werden. Dabei ist es beispielsweise vorteilhaft, dass der Funktionsblock im Wesentlichen flächig ausgestaltet ist, so dass alle Komponenten entlang einer zweidimensionalen Fläche ausgebildet sind. Außerdem wird ein hohes Maß an Vertauschungssicherheit ermöglicht, da intern keine falsche Montage möglich ist (da die entsprechende Fittinge fehlen, so dass die festen fluiden Verbindungen nur durch eine Art und Weise miteinander verbindbar sind). Schließlich wird eine hohe Service-Freundlichkeit erreicht, da alle Komponenten übersichtlich entlang des Rahmens angeordnet sind und bei der Fehlersuche, leicht Fehler feststellbar sind (fast alle Sensoren und Aktoren sind auf einer Fläche des Funktionsblockes angeordnet).

Die Erfindung wird nachfolgend bezugnehmend auf die beiliegenden Zeichnungen näher beschrieben, wobei:
- Fig. 1: einen Funktionsblock nach einem Ausführungsbeispiel der vorliegenden Erfindung zeigt;
- Fig. 2: einen Funktionsblock mit weiteren optionalen Komponenten nach weiteren Ausführungsbeispielen der vorliegenden Erfindung zeigt; und
- Fig. 3: einen Funktionsblock mit einer Steuereinheit gemäß weiterer Ausführungsbeispiele der vorliegenden Erfindung zeigt.

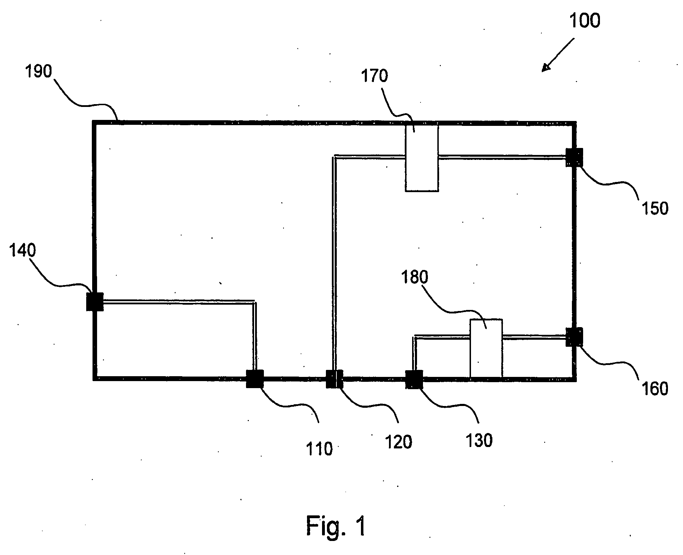

Die Fig. 1 zeigt einen Funktionsblock 100 zum fluiden Verbinden eines Verbrauchers, einer Rohwasserleitung, eines Abflusses und einer Wasseraufbereitungsanlage. Der Funktionsblock 100 weist folgende Merkmale auf: einen ersten Anschluss 110, einen zweiten Anschluss 120, einen dritten Anschluss 130, einen Rohwasseranschluss 140, einen Abwasseranschluss 150, einen Verbraucheranschluss 160, eine Druckregelungseinheit 170, eine Überwachungseinrichtung 180 und einen Rahmen 190.

An den ersten, zweiten und dritten Anschluss 110, 120 und 130 ist die Wasseraufbereitungsanlage anschließbar und die Rohwasserleitung ist an dem Rohwasseranschluss 140 anschließbar, wobei der erste Anschluss 110 und die Rohwasserleitung fluid miteinander verbunden sind. Außerdem ist die Druckregelungseinheit 170 fluid mit dem zweiten Anschluss 120 und mit dem Abwasseranschluss 150 verbunden. Die Druckregelungseinheit 170 ist ferner ausgebildet, um während des Betriebes des Funktionsblockes einen bestimmten Druck an dem zweiten Anschluss 120 aufrecht zu halten. Damit kann beispielsweise beim Anschluss einer Umkehrosmoseanlage der nötige Druck innerhalb einer solchen Anlage gesichert werden. Die Überwachungseinrichtung 180 ist fluid zwischen dem dritten Anschluss 130 und dem Verbraucheranschluss 160 angeordnet und ist ferner ausgebildet, um zumindest eine Beschaffenheit eines fluiden Flusses zwischen dem dritten Anschluss 130 und dem Verbraucheranschluss 160 zu ermitteln.

An dem Rahmen 190 ist der erste Anschluss 110 und/oder der zweite Anschluss 120 und/oder der dritte Anschluss 130 und/oder der Rohwasseranschluss 140 und/oder der Abwasseranschluss 150 und/oder der Verbraucheranschluss 160 und/oder die Druckregelungseinheit 170 und/oder die Überwachungseinrichtung 180 befestigt. Optional sind sämtliche diese Komponenten fest mit dem Rahmen verbunden, so dass deren örtliche Position zueinander durch den Rahmen fest vorgegeben wird und die entsprechenden fluiden Verbindungen zwischen den einzelnen Komponenten ohne die Nutzung von Fittingen durch feste fluide Leitungen möglich sind. Optional kann der Rahmen von dem Verbraucher und der Wasseraufbereitungsanlage trennbar ausgebildet sein, so dass der Verbraucher und die Wasseraufbereitungsanlage leicht mit dem Funktionsblock verbindbar sind und der Funktionsblock als ein auswechselbares Modul zwischen dem Verbraucher und der Wasseraufbereitungsanlage nutzbar ist.

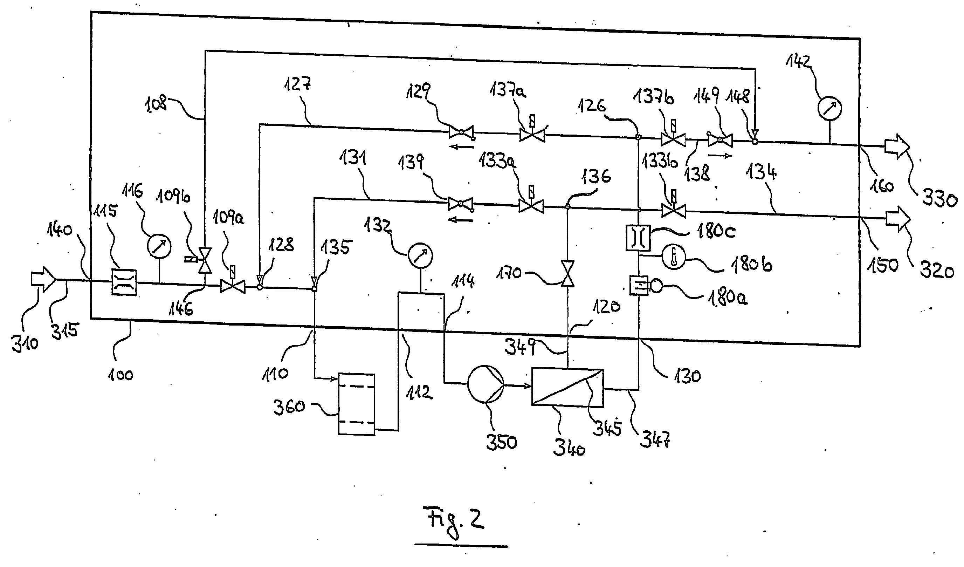

Die Fig. 2 zeigt weitere, optionale Komponenten für den Funktionsblock 100, die entweder einzeln oder in beliebigen Kombinationen zu dem Funktionsblock, wie er in der Fig. 1 gezeigt ist, hinzugefügt werden können. Um die Übersichtlichkeit der Figur zu vereinfachen, ist in dem Ausführungsbeispiel der Fig. 2 der Rahmen nicht explizit gezeigt. Die Fig. 2 zeigt somit im Wesentlich nur einen Verschaltungsplan der einzelnen Komponenten, ohne deren relative örtliche Position zueinander durch den Rahmen 190 zu bestimmen.

Bei der folgenden Beschreibung ist die Stromrichtung wie folgt definiert: Rohwasser gelangt von dem Rohwasseranschluss 140 in den Funktionsblock und fließt nach der Aufbereitung als Retentat von dem zweiten Anschluss 120 über den Abwasseranschluss 150 oder als Permeat von dem dritten Anschluss 130 über den Verbraucheranschluss 160 aus dem Funktionsblock 100 ab.

In dem Funktionsblock der Fig. 2 ist der Rohwasseranschluss 140 über eine Rohwasserleitung 315 mit einem Rohwasserzulauf 310 verbunden. Ferner ist bei dem Funktionsblock der Abwasseranschluss 150 mit einer Abwasserabflussleitung 320 verbunden und der Verbraucheranschluss 160 ist mit einer Permeat-Abnahmestelle 330 verbunden, von welcher beispielsweise der Verbraucher das Permeat (d.h. das aufbereitete Wasser) empfangen kann. Ferner sind bei dem Ausführungsbeispiel der Fig. 2 drei Drucksensoren ausgebildet: neben dem Drucksensor 132 sind dies ein weiterer Drucksensor 116 und ein zusätzlicher Drucksensor 142. Zwischen dem Rohwasseranschluss 140 und dem ersten Anschluss 110 ist eine zweite Durchflussmesseinrichtung 115 ausgebildet und stromabwärts von der Durchflussmesseinrichtung 115 ist der weitere Drucksensor 116 ausgebildet, der den Druck auf der fluiden Verbindung von dem Rohwasseranschluss 140 zu dem ersten Anschluss 110 ermittelt.

In dem Funktionsblock der Fig. 2 weist der Funktionsblock 100 optional eine Retentat-Rückführungsleitung 131 zwischen einer Retentat-Abzweigestelle 136 (stromabwärts von der Druckregelungseinheit 170) und dem ersten Anschluss 110 auf. Die Retentat-Rückführungsleitung 131 mündet an einer Retentat-Rückführungs-Einmündestelle 135 in die fluide Verbindung zwischen dem Rohwasseranschluss 140 und dem ersten Anschluss 110 ein. Entlang der Retentat-Rückführungsleitung 131 ist ein Retentat-Rückführungsventil als erster Teil der ersten Ventileinrichtung 133a (z.B. ein Magnetventil) und ein erstes Rückschlagventil 139 ausgebildet.

Außerdem ist entlang einer Retentat-Abflussleitung 134 zwischen der Retentat-Abzweigestelle 136 und dem Abwasseranschluss 150 ein Retentat-Ausgangsventil 133b (z.B. ein Magnetventil) angeordnet. Das Retentat-Rückfuhrungsventil 133a und das Retentat-Ausgangsventil 133b bilden die erste Ventileinrichtung 133, die ausgebildet ist, um eine erste fluide Verbindung von der Druckregelungseinheit 170 zum Abwasseranschluss 150 steuerbar zu öffnen oder zu schließen und, optional, die Retentat-Rückführungsleitung 131 zwischen der Druckregelungseinheit 170 und der Retentat-Rückführungs-Einmündestelle 135 steuerbar zu öffnen oder zu schließen.

In dem Funktionsblock der Fig. 2 weist die Überwachungseinrichtung 180 eine Leitfähigkeitsmesseinrichtung 180a, eine Temperaturmesseinrichtung 180b und eine erste Durchflussmesseinrichtung 180c auf. Außerdem weist das Ausführungsbeispiel optional eine Permeat-Rückführungsleitung 127 zwischen einer Permeat-Abzweigestelle 126, die sich stromabwärts der Überwachungseinrichtung 180 befindet, und dem ersten Anschluss 110 auf. Die Permeat-Rückführungsleitung 127 mündet stromaufwärts von der Retentat-Rückführungs-Einmündestelle 135 an einer Permeat-Rückführungs-Einmündestelle 128 in die fluide Verbindung zwischen dem Rohwasseranschluss 140 und dem ersten Anschluss 110 ein. Entlang der Permeat-Rückführungsleitung 127 ist ein Permeat-Rückführungsventil 137a (z.B. ein Magnetventil) und optional ein erstes Permeat-Rückschlagventil 129 ausgebildet, welches einen fluiden Fluss lediglich in die Richtung hin zu der Permeat-Rückführungs-Einmündestelle 128 erlaubt.

Optional sind entlang einer Permeat-Abflussleitung 138 zwischen der Permeat-Abzweigestelle 126 und dem Verbraucheranschluss 160 ein Permeat-Ausgangsventil 137b (z.B. ein Magnetventil), ein zweites Permeat-Rückschlagventil 149und der zusätzliche Drucksensor 142 ausgebildet. Der zusätzliche Drucksensor 142 misst den Druck an dem Verbraucheranschluss 160. Das zweite Permeat-Rückschlagventil 149 verhindert, dass ein fluider Rückfluss von dem Verbraucheranschluss 160 und dem Bypass 108 mit der Bypass-Einmündestelle 148 (siehe Beschreibung unten), möglich ist. Das Permeat-Rückführungsventil 137a und das Permeat-Ausgangsventil 137b bilden die zweite Ventileinrichtung 137, die ausgebildet ist, um die zweite fluide Verbindung 138 von der Überwachungseinrichtung 180 zu dem Verbraucheranschluss 160 (über die Permeat Abflussleitung 138) steuerbar zu öffnen oder zu schließen und/oder die Permeat-Rückführungsleitung 127 steuerbar zu öffnen oder zu schließen.

Der Funktionsblock wie in der Fig. 2 gezeigt ist, weist ferner optional eine Bypass-Leitung 108 auf, die zwischen einer Bypass-Abzweigestelle 146, die fluid zwischen dem weiteren Drucksensor 116 und der Permeat-Rückführungs-Einmündestelle 128 ausgebildet ist, und einer Bypass-Einmündestelle 148 (zwischen dem zweiten Permeat-Rückschlagventil 149 und dem zusätzlichen Drucksensor 142) ausgebildet ist. Entlang der Bypass-Leitung 108 ist ein Bypass-Ventil 109b (z.B. ein Magnetventil) ausgebildet und zwischen der Bypass-Abzweigestelle 146 und der Permeat-Rückführungs-Einmündestelle 128 ist ein Eingangsventil 109a (z.B. ein Magnetventil) ausgebildet.

Das Eingangsventil 109a und das Bypass-Ventil 109b bilden die dritte Ventileinrichtung, die ausgebildet ist, um eine dritte fluide Verbindung von dem Rohwasseranschluss 140 zu dem ersten Anschluss 110 steuerbar zu öffnen oder zu schließen und/oder die Bypass-Leitung 108 steuerbar zu öffnen oder zu schließen.

Der beispielhafte Funktionsblock der Fig. 2 weist ferner einen Vorfilteranschluss 112 und einen weiteren Anschluss 114 auf, so dass es möglich ist, ein Vorfilter 360 zwischen dem ersten Anschluss 110 und dem Vorfilteranschluss 112 anzuschließen. Außerdem wird die Wasseraufbereitungsanlage zwischen dem weiteren Anschluss 114, dem zweiten Anschluss 120 und dem dritten Anschluss 130 angeschlossen. Die Wasseraufbereitungsanlage kann beispielsweise eine Pumpe 350 und beispielsweise eine Umkehrosmose-Anlage mit einem Membranmodul 340 und einer Membran 345 umfassen. Bei der beispielhaften Umkehrosmose-Anlage ist der zweite Anschluss 120 über eine RetentatLeitung 349 mit der Retentatkammer der Umkehrosmose-Anlage verbunden und der dritte Anschluss 130 ist über eine Permeatleitung 347 mit einer Permeatkammer der Umkehrosmose-Anlage verbunden.

Die genutzte Umkehrosmose-Anlage kann beispielsweise aufzubereitendes Wasser, welches über den Vorfilter 360 und dem weiteren Anschluss 114 der Pumpe 350 zugeführt wird, in ein Filtermodul unter hohen Druck an der Oberfläche einer semipermeablen Membran 345 entlang führen, wobei ein Teil des Wassers, das sogenannte Permeat, so über die Oberfläche der Membran geführt wird, dass es durch die Membran tritt und auf der anderen Seite der Membran innerhalb des Moduls in eine Permeat-Sammelkammer gesammelt wird und von dort über die Permeatleitung 347 dem dritten Anschluss zugeführt wird.

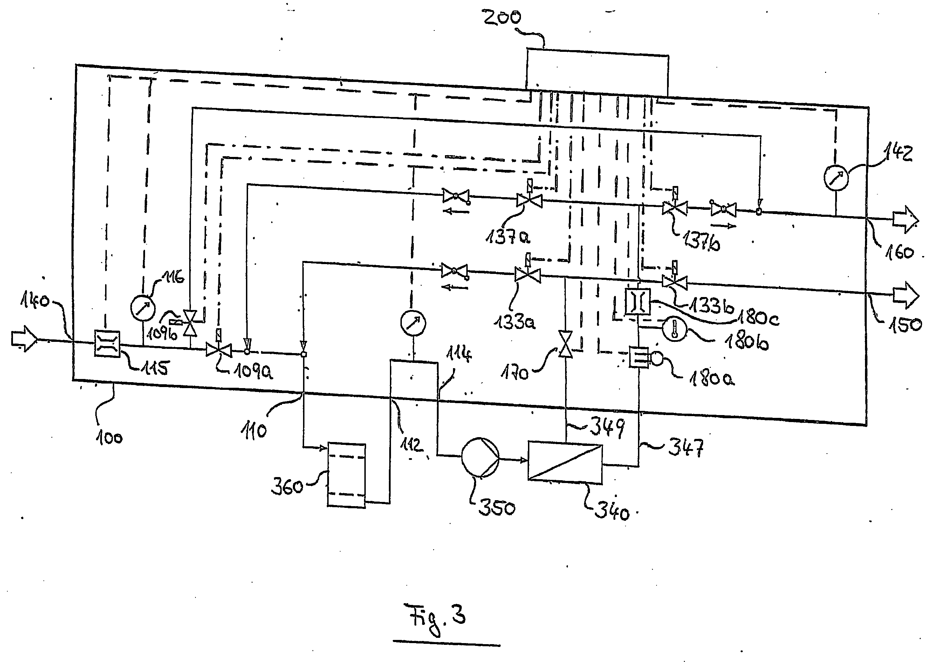

Fig. 3 zeigt ein Ausführungsbeispiel für die Steuerung der einzelnen Ventile, die beispielsweise als Magnetventile steuerbar ausgebildet sein können. Die Steuerung erfolgt über eine Steuereinheit 200, die Teil des Funktionsblockes sein oder, alternativ, über einen Kabelbaum extern mit dem Funktionsblock 100 verbindbar ist. Der Funktionsblock weist dazu elektrische Signalleitungen zwischen der Steuereinheit 200 und den steuerbaren Komponenten des Funktionsblocks 100 auf. Beispielsweise ist eine Signalleitung von der Steuereinheit 200 zu dem Bypass-Ventil 109b und/oder zu dem Eingangsventil 109a und/oder zu dem Permeat-Rückführungsventil 137a und/oder zu dem Permeat-Ausgangsventil 137b und/oder zu dem Retentat-Rückführungsventil 133a und/oder zu dem Retentat-Ausgangsventil 133b ausgebildet. Damit wird es möglich, dass die Steuereinheit 200 ein oder mehrere dieser Ventile 109, 133, 137 öffnet oder schließt (bzw. optional teilweise öffnet oder schließt), um somit Flussraten entlang der verschiedenen fluiden Verbindungen zu beeinflussen (z.B. verschiedene Flusswege zu öffnen oder zu schließen).

Um eine effiziente Steuerung zu ermöglichten, sind optional weitere Signalleitungen zwischen der Druckregeleinrichtung 170 und der Steuereinheit 200 und/oder zwischen der Leitfähigkeitsmesseinrichtung 180a und der Steuereinheit 200 und/oder zwischen dem Temperatursensor 180b und/oder der ersten Durchflussmesseinrichtung 180c und der Steuereinheit 200 ausgebildet. Ferner können weitere Signalleitungen von der Steuereinheit 200 dem Drucksensor 116 und/oder zu dem weiteren Drucksensor 132 und/oder zu dem zusätzlichen Drucksensor 142 und/oder zu der zweiten Durchflussmesseinrichtung 115 ausgebildet sein.

Die weiteren Signalleitungen, die durch gestrichelte Linien in der Fig. 3 dargestellt sind, erlauben somit eine Erfassung von verschiedenen Betriebszuständen (z.B. ob eine Verbindung geöffnet ist oder nicht) oder eine Ermittlung zumindest einer Beschaffenheit (z.B. einer physikalischen Eigenschaft wie Druck oder Temperatur oder elektrischer Leitfähigkeit) von fluiden Flüssen entlang der fluiden Verbindungen in dem Funktionsblock. Mit den Signalleitungen, die in der Fig. 3 durch Strich-Punkt-Linien dargestellt sind, kann die Steuereinheit 200 den Funktionsblock 100 steuern, um ihn in unterschiedlichen Arbeitsweisen/Arbeitsmodi zu versetzen. Diese Steuerung kann optional basierend auf die zuvor erfasste Beschaffenheit oder den zuvor ermittelten Betriebszustand erfolgen oder unabhängig von der Beschaffenheit oder dem Betriebszustand erfolgen.

Beispielsweise können die folgenden Arbeitsweisen des Funktionsblocks 100 durch die Steuereinheit 200 realisiert werden. In einer normalen Arbeitsweise gelangt das Rohwasser über den Rohwasseranschluss 140 und über ein geöffnetes Eingangsventil 109a (bei geschlossenem Bypass-Ventil 109b) zu dem ersten Anschluss 110, wo es den Funktionsblock 100 verlässt und in dem Vorfilter (beispielsweise ein kombinierter Aktivkohle- und/oder Sedimentvorfilter) zunächst gefiltert wird, um anschließend über den Vorfilteranschluss 112 wieder in den Funktionsblock 100 zu gelangen, wo es nach einer Druckmessung durch den Drucksensor 132 den Funktionsblock 100 durch den weiteren Anschluss 114 wieder verlässt. An dem weiteren Anschluss 114 ist beispielsweise eine Pumpe 350 angeschlossen, die das Rohwasser hin zu der Wasseraufbereitungsanlage (beispielsweise einem Umkehrosmose-Membranmodul) pumpt. In dem beispielhaften Umkehrosmose-Membranmodul wird das Wasser zu einer Membran 345 gepumpt, wo es unter erhöhtem Druck entlang fließt, so dass Permeat über die Permeatleitung 347 zu dem dritten Anschluss 130 gelangt und das Retentat über die Retentatleitung 349 zu dem zweiten Anschluss 120 gelangt. Der Retentat-Fluss wird nach Passieren der Druckregeleinrichtung 170 und nach dem Passieren des geöffneten Retentat-Ausgangsventils 133b dem Abwasseranschluss 150 zugeführt (bei geschlossenem Retentat-Rückführungsventil 133a). Der Permeat-Fluss wird über den dritten Anschluss 130 wieder in den Funktionsblock 100 geleitet, wo er nach dem Passieren der optionalen Leitfähigkeitsmesseinrichtung 180a und/oder der optionalen Temperaturmessung durch die Temperaturmesseinrichtung 180b und/oder der optionalen ersten Durchflussmesseinrichtung 180c und einem geöffneten Permeat-Ausgangsventil 137b dem Verbraucheranschluss 160 zugeführt wird, wobei das optionale Permeat-Rückschlagventil passiert wird. In dieser normalen Betriebsweise ist sowohl die Bypass-Leitung 108, als auch die Permeat-Rückführungsleitung 127 sowie die Retentat-Rückführungsleitung 131 geschlossen (d.h. das Retentat-Rückführungsventil 133a, das Permeat-Rückführungsventil 137a und das Bypass-Ventil 109b sind geschlossen).

In einer weiteren Arbeitsweise kann beispielsweise das Rohwasser aus dem Rohwasseranschluss 110 über die Bypass-Leitung 108 direkt dem Verbraucheranschluss 160 zugeführt werden, indem das Eingangsventil 109a geschlossen ist, das Bypass-Ventil 109b geöffnet und das Permeat-Ausgangsventil 137b ebenfalls geschlossen ist. Damit kann das Rohwasser nur über die Bypass-Leitung 108 geleitet werden.

In einer weiteren Arbeitsweise ist sowohl das Permeat-Ausgangsventil 137b als auch das Retentat-Ausgangsventil 133b geschlossen, so dass bei zusätzlich geschlossenem Bypass-Ventil 109b und geöffnetem Eingangsventil 109a das Rohwasser wie bei der normalen Betriebsweise über die Filtereinrichtung 360, nach dem Passieren des Drucksensors 132 und der Wasseraufbereitungsanlage 340 der Retentat-Fluss (aus der Retentatleitung 349) über Retentat-Rückführungsleitung 131 als auch der Permeat-Fluss (über die Permeatleitung 347) über die Permeat-Rückführungsleitung 127 wiederum zu dem ersten Anschluss 110 geführt werden. Damit ist es möglich, einen geschlossenen Kreislauf für den Retentat-Fluss und/oder für den Permeat-Fluss zu erreichen. Alternativ ist es ferner möglich, dass lediglich die Retentat-Rückführungsleitung 131 oder lediglich die Permeat-Rückführungsleitung geöffnet werden, und die jeweils andere Leitung geschlossen ist, so dass entweder nur das Permeat über den Permeat-Anschluss 160 zu dem Verbraucher geleitet wird und das Retentat wiederum zurückgeführt wird oder, alternativ, dass nur das Retentat dem Abwasseranschluss 150 zugeführt wird, währenddessen das Permeat wiederum dem ersten Anschluss zugeführt wird.

Bei weiteren Ausführungsbeispielen sind ist das Bypass-Ventil 109b und/oder das Eingangsventil 109a und/oder das Permeat-Rückführungsventil 137a und/oder das Permeat-Ausgangsventil 137b und/oder das Permeat-Rückführungsventil 133a und/oder das Retentat-Ausgangsventil 133b nur teilweise geöffnet oder geschlossen, so dass die entsprechenden Flüsse nur zum Teil durchgelassen bzw. zurück geführt werden.

Die Schaltungspläne, wie sie in den Fig. 2 und 3 gezeigt sind, stellen lediglich eine Veranschaulichung der einzelnen Elemente dar, wobei die konkrete räumliche Anordnung an dem Rahmens anders ausgeführt sein kann. Beispielsweise ist, wie die Fig. 1 zeigt, der Verbraucheranschluss 160 und der Abwasseranschluss 150 vertauscht. Ebenso können die anderen Komponenten entlang des Rahmens an verschiedenen Stellen angeordnet sein, und die räumliche Anordnung, wie sie in den Fig. 2 und 3 gezeigt ist, dien lediglich der Veranschaulichung, ohne dass die entsprechenden Komponenten räumlich so anzuordnen sind, wie sie in den Fig. 2 und 3 gezeigt sind. Beispielweise kann der Verbraucheranschluss 160 und der Abwasseranschluss 150 auf der einen Seite des Funktionsmoduls angeordnet werden, währenddessen der Rohwasseranschluss 140 und/oder die Wasseraüfbreitungsanlage 360, 350, 340 auf einer anderen oder gegenüberliegenden Seite angeordnet sind.

Die in der Beschreibung, den Ansprüchen und den Figuren offenbarten Merkmale der Erfindung können sowohl einzeln als auch in beliebiger Kombination für die Verwirklichung der Erfindung wesentlich sein.

## Patentansprüche

1. Funktionsblock (100) zum fluiden Verbinden eines Verbrauchers, einer Rohwasserleitung, eines Abflusses und einer Wasseraufbereitungsanlage, mit:
einem ersten Anschluss (110), einem zweiten Anschluss (120), einem dritten Anschluss (130), an denen die Wasseraufbereitungsanlage anschließbar ist;
einem Rohwasseranschluss (140), der an eine Rohwasserleitung anschließbar ist, wobei der erste Anschluss (110) und der Rohwasseranschluss (140) fluid verbunden sind;
einem Abwasseranschluss (150) und einem Verbraucheranschluss (160);
**dadurch gekennzeichnet, dass** der Funktionsblock ferner Folgendes aufweist:
eine Druckregelungseinheit (170), die fluid mit dem zweiten Anschluss (120) und mit dem Abwasseranschluss (150) verbunden ist, wobei die Druckregelungseinheit (170) ausgebildet ist, um während des Betriebes des Funktionsblockes einen vorbestimmten Druck in der fluiden Verbindung zum zweiten Anschluss (120) aufrecht zu halten;
eine Überwachungseinrichtung (180), die fluid mit dem dritten Anschluss (130) und fluid mit dem Verbraucheranschluss (160) verbunden ist, wobei die Überwachungseinrichtung (180) ausgebildet ist, um zumindest eine Beschaffenheit eines fluiden Flusses zwischen dem dritten Anschluss (130) und dem Verbraucheranschluss (160) zu ermitteln; und
einen Rahmen (190), an welchem zumindest ein Element aus dem Folgenden befestigt ist: der erste Anschluss (110), der zweite Anschluss (120), der dritte Anschluss (130), der Rohwasseranschluss (140), der Abwasseranschluss (150), der Verbraucheranschluss (160), die Druckregelungseinheit (170) und die Überwachungseinrichtung (180).

2. Funktionsblock (100) nach Anspruch 1, der ferner Folgendes aufweist:
eine Retentatrückführungsleitung (131), die die Druckregelungseinheit (170) und den ersten Anschluss (110) verbindet; und
eine erste Ventileinrichtung (133a, 133b), die ausgebildet ist, um eine erste fluide Verbindung (134) von der Druckregelungseinheit (170) zu dem Abwasseranschluss (150) und/oder die Retentatrückführungsleitung (131) steuerbar zu öffnen oder zu schließen.

3. Funktionsblock (100) nach einem der vorhergehenden Ansprüche, der weiter Folgendes aufweist:
eine Permeatrückführungsleitung (127), die die Überwachungseinrichtung (180) und den ersten Anschluss (110) verbindet; und
eine zweite Ventileinrichtung (137a, 137b), die ausgebildet ist, um eine zweite fluide Verbindung (138) von der Überwachungseinrichtung (180) zu dem Verbraucheranschluss (160) und/oder die Permeatrückführungsleitung (127) steuerbar zu öffnen oder zu schließen.

4. Funktionsblock (100) nach Anspruch 3, wobei entlang der Permeatrückführungsleitung (127) ein erstes Rückschlagventil (129) und/oder entlang der Retantatrückführungsleitung (131) ein zweites Rückschlagventil (139) angeordnet sind, wobei das erste Rückschlagventil (129) und das zweite Rückschlagventil (139) ausgebildet sind, um einen fluiden Fluss von dem ersten Anschluss (110) zu blockieren.

5. Funktionsblock (100) nach einem der vorhergehenden Ansprüche, der weiter Folgendes aufweist:
eine Bypass-Leitung (108), die den Rohwasseranschluss (140) und dem Verbraucheranschluss (160) verbindet; und
eine dritte Ventileinrichtung (109a, 109b), die ausgebildet ist, um eine dritte fluide Verbindung von dem Rohwasseranschluss (140) zu dem ersten Anschluss (110) und/oder die Bypass-Leitung (108) steuerbar zu öffnen oder zu schließen.

6. Funktionsblock (100) nach einem der vorhergehenden Ansprüche, wobei die Überwachungseinrichtung (180) eine erste Durchflussmesseinrichtung (180c) zum Messen einer Durchflussrate und/oder einen Temperatursensor (180b) und/oder eine Leitfähigkeitsmesseinrichtung (180a) aufweist.

7. Funktionsblock (100) nach einem der vorhergehenden Ansprüche, wobei die Wasseraufbereitungsanlage einen Vorfilter aufweist und der Funktionsblock weiter Folgendes aufweist:
einen Drucksensor (132);
einen Vorfilteranschluss (112) und einen weiteren Anschluss (114) für die Wasseraufbereitungsanlage, wobei der Drucksensor (132) fluid zwischen dem Vorfilteranschluss (112) und dem weiteren Anschluss (114) angeordnet ist, und wobei der Vorfilter zwischen dem ersten Anschluss (110) und dem Vorfilteranschluss (112) anschließbar ist.

8. Funktionsblock (100) nach einem der vorhergehenden Ansprüche, der zumindest eines der folgenden Komponenten aufweist: einen weiteren Drucksensor (116) zum Messen eines weiteren Druckes am Rohwasseranschluss (140), eine zweite Durchflussmesseinrichtung (115) zum Messen einer Durchflussrate von Rohwasser von dem Rohwasseranschluss (140), einen zusätzlichen Drucksensor (142) zum Messen eines zusätzlichen Druckes am Verbraucheranschluss (160).

9. Funktionsblock (100) nach einem der vorhergehenden Ansprüche, wobei zumindest zwei aus dem Folgenden: die Druckregelungseinheit (170), die Überwachungseinrichtung (180), die erste, die zweite und die dritte Ventileinrichtung (133a, 133b; 137a, 137b; 109a, 109b), der Drucksensor (132), der zusätzliche Drucksensor (142) entlang einer Hauptfläche des Rahmens (190) versetzt zueinander angeordnet sind, so dass der Funktionsblock eine flächenförmige Ausgestaltung aufweist.

10. Funktionsblock (100) nach einem der vorhergehenden Ansprüche, wobei der Rahmen (190) von dem Verbraucher und der Wasseraufbereitungsanlage trennbar ist, so dass der Funktionsblock (100) ein auswechselbares Modul darstellt.

11. Funktionsblock (100) nach einem der Ansprüche 3 bis 8, wobei die erste Ventileinrichtung (133a, 133b) und/oder die zweite Ventileinrichtung (137a, 137b) und/oder die dritte Ventileinrichtung (109a, 109b) ein Drei-Wegeventil oder zwei ZweiWegeventile umfasst.

12. Funktionsblock (100) nach einem der Ansprüche 4 bis 9, der weiter eine Steuereinheit (200) umfasst, die ausgebildet ist, um den Funktionsblock in verschiedenen Betriebsmodi durch ein Steuern der ersten Ventileinrichtung (133a, 133b) und/oder der zweiten Ventileinrichtung (137a, 137b) und/oder der dritten Ventileinrichtung (109a, 109b) zu betreiben und/oder Sensordaten von dem Drucksensor (132) und/oder von dem zusätzlichen Drucksensor (142) oder von der Überwachungseinrichtung (180) zu erfassen.

13. Funktionsblock (100) nach einem der vorhergehenden Ansprüche, wobei die Druckregelungseinheit (170) ein Schaltventil, ein motorisch angetriebenes digitales oder analoges Ventil, eine Drossel oder allgemein ein Mengenregler ist.

14. System mit:
einem Funktionsblock nach einem der Ansprüche 1 bis 13;
einer Wasseraufbereitungsanlage; und
einem Verbraucher.

15. System nach Anspruch 14, wobei
die Wasseraufbereitungsanlage eines aus dem Folgenden ist: eine Teilentsalzungsanlage, eine Umkehrosmoseanlage, eine Vollentsalzungsanlage, eine Wasserenthärtungsanlage, eine Mikro-, Nano- oder Ultrafiltrationsanlage; und/oder der Verbraucher eines aus dem Folgenden ist: eine gewerbliche Spülmaschine, eine Haushaltsspülmaschine, eine Waschmaschine, eine Kaffeemaschine, eine Eiswürfelmaschine, ein Kombidämpfer.

## Claims

1. A function block (100) for the fluid connection of a consumer, an untreated water pipe, an outflow and a water treatment system, comprising:
a first connector (110), a second connector (120), and a third connector (130), to which the water treatment system can be connected;
an untreated water connector (140), which can be connected to an untreated water pipe, wherein the first connector (110) and the untreated water connector (140) are fluidically connected;
a wastewater connector (150) and a consumer connector (160);
**characterised in that** the function block also comprises the following:
a pressure control unit (170), which is fluidically connected to the second connector (120) and to the wastewater connector (150), wherein the pressure control unit (170) is designed to maintain a predetermined pressure in the fluid connection to the second connector (120) during the operation of the function block;
a monitoring means (180), which is fluidically connected to the third connector (130) and is fluidically connected to the consumer connector (160), wherein the monitoring means (180) is designed to determine at least one property of a fluid flow between the third connector (130) and the consumer connector (160); and
a frame (190), to which at least one element from the following is fastened: the first connector (110), the second connector (120), the third connector (130), the untreated water connector (140), the wastewater connector (150), the consumer connector (160), the pressure control unit (170) and the monitoring means (180).

2. The function block (100) according to Claim 1, which also has:
a retentate return pipe (131), which connects the pressure control unit (170) and the first connector (110); and
a first valve means (133a, 133b), which is designed to open or to close a first fluid connection (134) from the pressure control unit (170) to the wastewater connector (150) and/or the retentate return pipe (131) in a controllable manner.

3. The function block (100) according to one of the preceding claims, which also has the following:
a permeate return pipe (127), which connects the monitoring means (180) and the first connector (110); and
a second valve means (137a, 137b), which is designed to open or to close a second fluid connection (138) from the monitoring means (180) to the consumer connector (160) and/or the permeate return pipe (127) in a controllable manner.

4. The function block (100) according to Claim 3, wherein a first check valve (129) is arranged along the permeate return pipe (127) and/or a second check valve (139) is arranged along the retentate return pipe (131), wherein the first check valve (129) and the second check valve (139) are designed to block a fluid flow from the first connector (110).

5. The function block (100) according to one of the preceding claims, which also has the following:
a bypass pipe (108), which connects the untreated water connector (140) and the consumer connector (160); and
a third valve means (109a, 109b), which is designed to open or to close a third fluid connection from the untreated water connector (140) to the first connector (110) and/or the bypass pipe (108) in a controllable manner.

6. The function block (100) according to one of the preceding claims, wherein the monitoring means (180) has a first flow-measuring means (180c) for measuring a flow rate and/or a temperature sensor (108b) and/or a conductivity-measuring means (180a).

7. The function block (100) according to one of the preceding claims, wherein the water treatment system has a pre-filter and the function block also has the following:
a pressure sensor (132);
a pre-filter connector (112) and a further connector (114) for the water treatment system, wherein the pressure sensor (132) is arranged fluidically between the pre-filter connector (112) and the further connector (114), and wherein the pre-filter can be connected between the first connector (110) and the pre-filter connector (112).

8. The function block (100) according to one of the preceding claims, having at least one of the following components: a further pressure sensor (116) for measuring a further pressure at the untreated water connector (140), a second flow-measuring means (115) for measuring a flow rate of untreated water from the untreated water connector (140), an additional pressure sensor (142) for measuring an additional pressure at the consumer connector (160).

9. The function block (100) according to one of the preceding claims, wherein at least two from the following: the pressure control unit (170), the monitoring means (180), the first, the second and the third valve means (133a, 133b; 137a, 137b; 109a, 109b), the pressure sensor (132), and the additional pressure sensor (142) are arranged along a main face of the frame (190) offset from one another, such that the function block has a two-dimensional design.

10. The function block (100) according to one of the preceding claims, wherein the frame (190) can be separated from the consumer and the water treatment system, such that the function block (100) constitutes an exchangeable module.

11. The function block (100) according to one of Claims 3 to 8, wherein the first valve means (133a, 133b) and/or the second valve means (137a, 137b) and/or the third valve means (109a, 109b) comprises a three-way valve or two two-way valves.

12. The function block (100) according to one of Claims 4 to 9, which also comprises a control unit (200), which is designed to operate the function block in different operating modes by controlling the first valve means (133a, 133b) and/or the second valve means (137a, 137b) and/or the third valve means (109a, 109b) and/or to capture sensor data from the pressure sensor (132) and/or from the additional pressure sensor (142) or from the monitoring means (180).

13. The function block (100) according to one of the preceding claims, wherein the pressure control unit (170) is a switching valve, a motor-driven digital or analogue valve, a choke or generally a volume regulator.

14. A system comprising:
a function block according to one of Claims 1 to 13;
a water treatment system; and
a consumer.

15. The system according to Claim 14, wherein
the water treatment system is one of the following: a partial desalination system, a reverse osmosis system, a full desalination system, a water softening system, a micro-, nano-, or ultra-filtration system; and/or the consumer is one of the following: an industrial dishwasher, a domestic dishwasher, a washing machine, a coffee machine, an ice machine, a combination steamer.

## Revendications

1. Bloc fonctionnel (100) pour la liaison fluide d'un consommateur, d'une conduite d'eau non traitée, d'un trou de vidange et d'une installation de traitement des eaux, ayant :
un premier raccordement (110), un deuxième raccordement (120) et un troisième raccordement (130) auxquels l'installation de traitement des eaux peut être raccordée ;
un raccordement d'eau non traitée (140) qui peut être raccordé à une conduite d'eau non traitée, le premier raccordement (110) et le raccordement d'eau non traitée (140) étant en liaison fluide ;
un raccordement d'eau usée (150) et un raccordement de consommateur (160) ;
**caractérisé en ce que** le bloc fonctionnel présente en outre ce qui suit :
une unité de régulation de pression (170) qui est en liaison fluide avec le deuxième raccordement (120) et avec le raccordement d'eau usée (150), l'unité de régulation de pression (170) étant conçue pour maintenir une pression prédéterminée dans la liaison fluide vers le deuxième raccordement (120) pendant le fonctionnement du bloc fonctionnel ;
un dispositif de surveillance (180) qui est en liaison fluide avec le troisième raccordement (130) et avec le raccordement de consommateur (160), le dispositif de surveillance (180) étant conçu pour déterminer au moins une propriété d'un écoulement fluide entre le troisième raccordement (130) et le raccordement de consommateur (160) ; et
un cadre (190) auquel est fixé au moins un élément parmi les suivants : le premier raccordement (110), le deuxième raccordement (120), le troisième raccordement (130), le raccordement d'eau non traitée (140), le raccordement d'eau usée (150), le raccordement de consommateur (160), l'unité de régulation de pression (170) et le dispositif de surveillance (180).

2. Bloc fonctionnel (100) selon la revendication 1, qui présente en outre ce qui suit :
une conduite de retour de rétentat (131) qui relie l'unité de régulation de pression (170) et le premier raccordement (110) ; et
un premier dispositif de vanne (133a, 133b) qui est conçu pour ouvrir ou fermer de façon pouvant être commandée une première liaison fluide (134) depuis l'unité de régulation de pression (170) vers le raccordement d'eau usée (150) et/ou la conduite de retour de rétentat (131).

3. Bloc fonctionnel (100) selon l'une des revendications précédentes, qui présente ce qui suit :
une conduite de retour de perméat (127) qui relie le dispositif de surveillance (180) et le premier raccordement (110) ; et
un deuxième dispositif de vanne (137a, 137b) qui est conçu pour ouvrir ou fermer de façon pouvant être commandée une deuxième liaison fluide (138) depuis le dispositif de surveillance (180) vers le raccordement de consommateur (160) et/ou la conduite de retour de perméat (127).

4. Bloc fonctionnel (100) selon la revendication 3, dans lequel un premier clapet antiretour (129) est agencé le long de la conduite de retour de perméat (127) et/ou un deuxième clapet antiretour (139) est agencé le long de la conduite de retour de rétentat (131), le premier clapet antiretour (129) et le deuxième clapet antiretour (139) étant conçus pour bloquer un écoulement fluide depuis le premier raccordement (110).

5. Bloc fonctionnel (100) selon l'une des revendications précédentes, qui présente ce qui suit :
une conduite de dérivation (108) qui relie le raccordement d'eau non traitée (140) et le raccordement de consommateur (160) ; et
un troisième dispositif de vanne (109a, 109b) qui est conçu pour ouvrir ou fermer de façon pouvant être commandée une troisième liaison fluide depuis le raccordement d'eau non traitée (140) vers le premier raccordement (110) et/ou la conduite de dérivation (108).

6. Bloc fonctionnel (100) selon l'une des revendications précédentes, dans lequel le dispositif de surveillance (180) présente un premier dispositif de mesure de débit (180c) pour mesurer un débit et/ou un capteur de température (180b) et/ou un dispositif de mesure de conductivité (180a).

7. Bloc fonctionnel (100) selon l'une des revendications précédentes, dans lequel l'installation de traitement des eaux présente un préfiltre et le bloc fonctionnel présente en outre ce qui suit :
un capteur de pression (132) ;
un raccordement de préfiltre (112) et un raccordement supplémentaire (114) pour l'installation de traitement des eaux, le capteur de pression (132) étant agencé de façon fluide entre le raccordement de préfiltre (112) et le raccordement supplémentaire (114) et le préfiltre pouvant être raccordé entre le premier raccordement (110) et le raccordement de préfiltre (112).

8. Bloc fonctionnel (100) selon l'une des revendications précédentes, qui présente au moins l'un des composants suivants : un capteur de pression supplémentaire (116) pour mesurer une pression supplémentaire au niveau du raccordement d'eau non traitée (140), un deuxième dispositif de mesure de débit (115) pour mesurer un débit d'eau non traitée du raccordement d'eau non traitée (140) et un capteur de pression supplémentaire (142) pour mesurer une pression supplémentaire au niveau du raccordement de consommateur (160).

9. Bloc fonctionnel (100) selon l'une des revendications précédentes, dans lequel au moins deux éléments parmi l'unité de régulation de pression (170), le dispositif de surveillance (180), les premier, deuxième et troisième dispositifs de vanne (133a, 133b ; 137a, 137b ; 109a, 109b), le capteur de pression (132) et le capteur de pression supplémentaire (142) sont agencés en position décalée l'un par rapport à l'autre le long d'une surface principale du cadre (190) de telle sorte que le bloc fonctionnel présente une construction de forme plate.

10. Bloc fonctionnel (100) selon l'une des revendications précédentes, dans lequel le cadre (190) peut être séparé du consommateur et de l'installation de traitement des eaux de telle sorte que le bloc fonctionnel (100) constitue un module remplaçable.

11. Bloc fonctionnel (100) selon l'une des revendications 3 à 8, dans lequel le premier dispositif de vanne (133a, 133b) et/ou le deuxième dispositif de vanne (137a, 137b) et/ou le troisième dispositif de vanne (109a, 109b) comprend une vanne à trois voies ou deux vannes à deux voies.

12. Bloc fonctionnel (100) selon l'une des revendications 4 à 9, qui comprend en outre une unité de commande (200) qui est conçue pour faire fonctionner le bloc fonctionnel dans différents modes de fonctionnement par la commande du premier dispositif de vanne (133a, 133b) et/ou du deuxième dispositif de vanne (137a, 137b) et/ou du troisième dispositif de vanne (109a, 109b) et/ou par la détection de données provenant du capteur de pression (132) et/ou du capteur de pression supplémentaire (142) ou du dispositif de surveillance (180).

13. Bloc fonctionnel (100) selon l'une des revendications précédentes, dans lequel l'unité de régulation de pression (170) est une vanne de commutation, une vanne numérique ou analogique entraînée de façon motorisée, un étrangleur ou d'une manière générale un régulateur de débit.

14. Système comprenant :
un bloc fonctionnel selon l'une des revendications 1 à 13 ;
une installation de traitement des eaux ; et
un consommateur.

15. Système selon la revendication 14, dans lequel :
l'installation de traitement des eaux est l'un des éléments suivants : une installation de dessalement partiel, une installation d'osmose inverse, une installation de dessalement total, une installation d'adoucissement de l'eau ou une installation de micro-, nano- ou ultrafiltration ; et/ou le consommateur est l'un des éléments suivants : une rinceuse professionnelle, une rinceuse domestique, un lave-linge, une cafetière, une machine à glaçons ou un four à vapeur mixte.
